# EUROPÄISCHE PATENTSCHRIFT

(11) **EP 3 929 431 B1**
(45) Veröffentlichungstag und Bekanntmachung des Hinweises auf die Patenterteilung: **22.03.2023**
(21) Anmeldenummer: 20181436.5
(22) Anmeldetag: 22.06.2020
(51) Int. Cl.: F03D 1/06, F03D 13/10

(54) **BAUSATZ UND VERFAHREN ZUM VERBINDEN ZWEIER ROTORBLATTSEGMENTE EINES WINDENERGIEANLAGENROTORBLATTS**
ASSEMBLY AND METHOD FOR CONNECTING TWO ROTOR BLADE SEGMENTS OF A WIND ENERGY ROTOR BLADE
MODULE ET PROCÉDÉ DE RACCORDEMENT DE DEUX SEGMENTS DE PALE DE ROTOR D'UNE PALE DE ROTOR D'ÉOLIENNE

(43) Veröffentlichungstag der Anmeldung: 29.12.2021
(73) Patentinhaber: Nordex Energy SE & Co. KG, 22419 Hamburg (DE)
(72) Erfinder: Lipka, Thomas, 18055 Rostock (DE); Werner, Markus, 22419 Hamburg (DE)
(74) Vertreter: Epping - Hermann - Fischer

(56) Entgegenhaltungen:
- EP-A1- 3 581 790
- EP-A2- 2 199 604
- DE-A1-102018 108 695
- JP-A- 2006 329 109
- US-A1- 2019 032 634

## Beschreibung

Die Erfindung betrifft einen Bausatz und ein Verfahren zum Verbinden zweier Rotorblattsegmente eines Windenergieanlagenrotorblatts.

Windenergieanlagen mit Windenergieanlagenrotorblättern (im Folgenden auch kurz: Rotorblätter) sind aus dem Stand der Technik vielfach bekannt und werden verwendet, um Windenergie in elektrische Energie umzuwandeln. Windenergieanlagen weisen eine Vielzahl von Bauteilen auf, die miteinander, etwa mittels einer Flanschverbindung, verbunden werden. Zum Beispiel im Bereich einer Rotorblattwurzel weisen die Rotorblätter einen Rotorblattanschluss mit einer Vielzahl von in das Laminat integrierten Verbindungsmitteln auf, über welche die Rotorblätter mittels Befestigungsschrauben beziehungsweise Befestigungsbolzen mit einem Lagerring eines sogenannten Pitchlagers oder mit einem mit dem Lagerring verbundenen Bauteil wie zum Beispiel einem sogenannten Extender der Windenergieanlage verbunden werden. Die Verbindungsmittel können beispielsweise als Querbolzen oder als Lagerhülsen ausgebildet und Teil eines Flanscheinlegers für den Rotorblattanschluss sein. Ein derartiger Aufbau ist beispielsweise aus der internationalen Anmeldung WO 2015/124568 A1 bekannt. Die Dokumente US 2019/032634 A1 , EP 3 581 790 A1, EP 2 199 604 A2, JP 2006 329109 A und DE 10 2018 108695 A1 offenbaren einige weitere aus dem Stand der Technik bekannte Lösungen.

Alternativ finden (Flansch-)Verbindungen auch bei der Verbindung von Rotorblattsegmenten Verwendung, die, der Länge nach angeordnet und zusammengefügt, ein Rotorblatt bilden. Ein solches Rotorblatt wird als geteiltes oder segmentiertes Rotorblatt bezeichnet. Beispielsweise befinden sich Verbindungselemente dann im Laminat eines Anschlussendes oder Teilungsflansches der Rotorblattsegmente. Die Rotorblattsegmente können mittels Schraubbolzen direkt oder über geeignete Zwischenstücke miteinander verbunden werden.

Geteilte Rotorblätter sind insbesondere aus Transportgründen zu bevorzugen und gewinnen vor allem aufgrund der steigenden Gesamtlänge von Rotorblättern zunehmend an Bedeutung.

Eine Aufgabe, die der Erfindung zugrunde liegt, ist es, ein Montagekonzept für geteilte Rotorblätter anzugeben, welches eine besonders vorteilhafte Verbindung von Rotorblattsegmenten gewährleistet.

Gemäß einem ersten Aspekt wird ein Bausatz zum Verbinden zweier Rotorblattsegmente eines Windenergieanlagenrotorblatts offenbart. Der Bausatz weist einen Verbindungsbolzen zum Verschrauben der beiden Rotorblattsegmente auf. Der Bausatz weist weiter ein als Hülse ausgebildetes Druckstück auf, welches eine Aussparung aufweist und welches in einem verbundenen Zustand der beiden Rotorblattsegmente zwischen den Rotorblattsegmenten angeordnet ist. Der Bausatz weist weiter ein Montagestück für ein Montagewerkzeug zum Aufbringen einer Schraubkraft auf. Der Bausatz ist derart ausgebildet, dass in einem bestimmungsgemäßen Montagezustand des Bausatzes zum Verbinden der beiden Rotorblattsegmente der Verbindungsbolzen derart durch das Druckstück durchgeführt ist, dass ein Montageabschnitt des Verbindungsbolzens im Bereich der Aussparung des Druckstücks angeordnet ist. Weiterhin ist in dem bestimmungsgemäßen Montagezustand das Montagestück lösbar in die Aussparung des Druckstücks einsetzbar, so dass das Montagestück im Montageabschnitt sowohl formschlüssig mit dem Verbindungsbolzen als auch formschlüssig mit dem Druckstück verbunden ist. In einem bestimmungsgemäßen Einbauzustand des Bausatzes ist das Montagestück wieder aus dem Druckstück entnehmbar.

Zum Verbinden zweier Rotorblattsegmente eines Windenergieanalgenrotorblatts weisen diese typischerweise an zu verbindenden Anschlussenden eine Vielzahl von korrespondierenden Verbindungselementen, beispielsweise Lagerhülsen, auf. Mittels der Verbindungselemente wird eine Vielzahl von Bolzen-Verbindungen zwischen den beiden Segmenten hergestellt. Die Montage ist so angedacht, dass zunächst die Verbindungsbolzen in ein Anschlussende des einen Rotorblattsegments eingeschraubt werden. Anschließend werden hülsenförmige Druckstücke auf die Verbindungsbolzen aufgeschoben, ehe die freien Enden der Verbindungsbolzen in die entsprechenden korrespondierenden Verbindungselements des anderen Rotorblattsegments eingefädelt und eingeschraubt werden. Schließlich werden die beiden Rotorblattsegmente miteinander verschraubt, wobei die Verbindung mittels eines Montagewerkzeugs, beispielsweise einem (hydraulischen) Spannwerkzeug, fest verschraubt und vorgespannt wird. Somit sind die Druckstücke zwischen den Rotorblattsegmenten verspannt.

Der beschriebene Bausatz ist zum Herstellen einer solchen lösbaren Verbindung zwischen den zwei Rotorblattsegmenten eines Windenergieanlagenrotorblatts vorgesehen. Der offenbarte Bausatz sieht vor, dass zum Verschrauben und Verspannen der beiden Rotorblattsegmente das Montagewerkzeug an dem lösbaren Montagestück und/oder dem Druckstück ansetzt. Die Komponenten des Bausatzes, das heißt das Montagestück, der Montageabschnitt des Bolzens sowie das Druckstück, sind insbesondere hinsichtlich ihrer Formgebung entsprechend so ausgebildet, dass diese formschlüssig miteinander für die Montage koppelbar sind.

Im Montagezustand wird das Montagestück lösbar formschlüssig in die entsprechende Aussparung des Druckstücks eingesetzt, wobei zusätzlich eine formschlüssige, mechanische Kopplung zum Verbindungsbolzen hergestellt ist. Das Betätigen eines an das Montagestück beziehungsweise an das Druckstück angesetzten Werkzeuges, beispielsweise des erwähnten hydraulischen Spannwerkzeuges, bewirkt, dass eine Rotation über das Montagestück auf den Verbindungsbolzen übertragen wird. Dadurch können die beiden Rotorblattsegmente fest miteinander verschraubt/verspannt werden. Nach dem Verschrauben, das heißt nach Erreichen des bestimmungsgemäßen Einbauzustands, kann das lösbar in die Aussparung des Druckstücks eingesetzte Montagestück wieder aus dem Druckstück entnommen werden.

Der Bausatz gemäß der erfindungsgemäßen Lösung ermöglicht eine effektive Bauraumnutzung. Insbesondere trägt der Bausatz dazu bei, dass das Druckstück erheblich weniger Bauraum beansprucht im Vergleich zu einem Druckstück, welches eine entsprechend große Aussparung für das direkte Ansetzen eines Montagewerkzeug am Verbindungsbolzen vorhalten muss. Mit anderen Worten ist der notwendige Montagebauraum bei dem Druckstück verringert. Dies ermöglicht, Druckstücke mit vergleichswese kleinem Außendurchmesser zu verwenden. Dadurch ist insgesamt über einen Umfang eines Verbindungsbereiches der beiden Rotorblattsegmente eine vergleichsweise hohe Anzahl von entsprechenden Druckstücken und damit Verbindungsbolzen möglich.

Der vorgeschlagene Bausatz vermeidet, dass die eingeleitete Kraft direkt vom Druckstück auf den Verbindungsbolzen übertragen wird. Bei einer derartigen Lösung würde das Druckstück formschlüssig mit den Verbindungsbolzen innenliegend interagieren müssen, um diesen bei der Montage entsprechend mitzudrehen. Dadurch würde allerdings im bestimmungsgemäßen Einbauzustand, das heißt in einem verbundenen Zustand der beiden Rotorblattsegmente, stets eine mechanische Interaktion zwischen dem Verbindungsbolzen und dem zugehörigen Druckstück bestehen, wodurch Spannungen und Dehnungen in beiden Bauteilen hervorgerufen würden, was eine reduzierte Lebensdauer der Blattsegmentverbindungen zur Folge hätte. Auch würde eine derartige Lösung fertigungstechnisch aufwendige Druckstücke bedingen.

Ein weiterer Vorteil liegt darin, dass das lösbare Montagestück bei einer anderen Verbindungsstelle der beiden Rotorblattsegmente wieder verwendet werden kann. Wie erwähnt werden eine Vielzahl von Verbindungsbolzen zum Verbinden der beiden Rotorblattsegmente verwendet, beispielsweise über 40 Stück, so dass nicht zwingend für jede Verbindung ein Montagestück vorgehalten werden muss. Zumindest können sämtliche Montagestücke, die für eine Segmentverbindung nötig sind, für die Verbindung weiterer Segmente weiterer Rotorblätter verwendet werden. Dies trägt zu geringeren Kosten sowohl bei der Montage als auch bei der Herstellung bei.

Weiterhin ermöglicht der Bausatz eine besonders einfache und günstige Herstellung des Druckstücks, insbesondere aus einem einfachen Rohrhalbzeug. Dies ermöglicht besonders geringe Herstellungskosten.

Der Bausatz trägt weiterhin dazu bei, eine besonders momentensteife Verbindung beider Blattsegmente zu ermöglichen. Es wird die Aufnahme und Weiterleitung von besonders hohen Zug- und Druckkräften zwischen den beiden Rotorblattsegmenten ermöglicht. Weiterhin wird eine besonders effiziente Kraftübertragung ausschließlich über den Verbindungsbolzen von einem Segment in das zweite Segment ermöglicht, insbesondere nach Entnahme des Montagestücks. Ein derartiger Kraftschluss wird auch als "Inline" bezeichnet. Mit anderen Worten werden die Blattsegmente ohne Kraftumlenkungen wie bei exzentrischen Verschraubungen oder zug- oder biegebelasteten Zwischenstücken lösbar gefügt. Ein derartiger Kraftschluss ermöglicht eine sehr gute Materialausnutzung. Es wird zu einer geringen Neigung zum Klaffen der Verbindung und zu einer Biegebelastung der Verschraubungen beigetragen, insbesondere im Gegensatz zu herkömmlichen Flanschverbindungen. Weiterhin wird ein über den gesamten Verbindungsumfang gleichmäßiger Abstand der Verbindungselemente, etwa den Lagerhülsen, und damit Anschlussenden zueinander gewährleistet.

Das Druckstück ist als Hülse ausgebildet, das heißt das Druckstück weist entlang einer Haupterstreckungsrichtung, Längsachse, eine durchgängige Bohrung/Öffnung auf. Zusätzlich weist das Druckstück zumindest eine Aussparung in einer Wandung auf, so dass die durchgängige Bohrung zugänglich ist. Das Druckstück ist beispielsweise als Spannhülse ausgebildet.

Das Montagestück ist ein Hilfselement, mittels dem eine Drehbewegung eines Montagewerkzeugs, welches an dem Montagestück und/oder dem Druckstück ansetzt, auf den Verbindungsbolzen übertragbar ist. Beispielsweise ist das Montagestück in formschlüssigem Eingriff mit einem Montagewerkzeug während des bestimmungsgemäßen Montagezustands zum Verbinden der beiden Rotorblattsegmente. Hierzu weist das Montagestück beispielsweise ein oder mehrere Werkzeugflächen auf, die im direkten formschlüssigen Kontakt mit dem entsprechenden Montagewerkstück stehen beim Montieren. Weiterhin weist das Montagestück eine entsprechende Formgebung auf, die einer Formgebung der Aussparung des Druckstücks angepasst ist. Schließlich ist das Montagestück zumindest abschnittsweise hinsichtlich seiner Formgebung an den Montageabschnitt des Verbindungsbolzens so angepasst, dass wiederum eine formschlüssige Verbindung gegeben ist. Die formschlüssigen Verbindungen sind dergestalt, dass ein Drehmoment um die Längsachse des Druckstücks auf den eingeführten oder eingeschobenen Verbindungsbolzen übertragen werden kann.

Das Ansetzen des Montagewerkzeugs an dem lösbaren Montagestück und/oder dem Druckstück bedeutet, dass aufgrund der beschriebenen Formschlüsse das Werkzeug beispielsweise nur am Montagestück ansetzt, um den Verbindungsbolzen zu verdrehen bzw. zu verschrauben. Dabei wird das Druckstück mitgedreht. Es ist auch denkbar, dass das Werkzeug am Druckstück ansetzt und dieses verdreht, wobei mittelbar das Montagestück verdreht und damit der Verbindungsbolzen verdreht bzw. verschraubt wird.

Bei dem Verbindungsbolzen handelt es sich beispielsweise um einen Schraubbolzen. Der Verbindungsbolzen ist beispielsweise als ein Dehnschaftbolzen (mit entsprechenden Außengewinden) ausgebildet.

Bei den erwähnten Verbindungselementen, etwa den Lagerhülsen, handelt es sich beispielsweise um in die Anschlussenden der Blattsegmente einlaminierte Elemente. Es ist auch denkbar, dass die beiden Verbindungselemente durch Teilung eines Gesamtverbindungselements gebildet sind. In diesem Fall würde das Rotorblatt zunächst im Ganzen gefertigt, das heißt mit einteiliger Hülle beziehungsweise Schale, und anschließend an einer Teilungsstelle getrennt, etwa geschnitten oder gesägt. Die Trennung erfolgt im Bereich der Gesamtverbindungselemente, so dass pro Gesamtverbindungselement zwei Verbindungselementhälften entstehen, je eine für die beiden durch Teilung entstandenen Blattsegmente. Diese Hälften entsprechen den erwähnten ersten beziehungsweise zweiten Verbindungselementen. Die Verbindungselemente, etwa die Lagerhülsen, haben typischerweise eine Durchgangsbohrung beziehungsweise - Öffnung mit Innengewinden zum Verschrauben mit den Verbindungsbolzen.

Gemäß einer Ausführungsform sind im bestimmungsgemäßen Einbauzustand des Bausatzes das Druckstück und der Verbindungsbolzen voneinander entkoppelt. Mit anderen Worten ist kein unmittelbarer Kontakt zwischen dem Druckstück und dem Verbindungsbolzen ausgebildet. Mit wieder anderen Worten ist ein freier Spalt zwischen dem Verbindungsbolzen und dem Druckstück ausgebildet. Durch das Entnehmen des Montagestücks nach der Montage ist somit ermöglicht, dass das Druckstück von dem Verbindungsbolzen mechanisch entkoppelt ist. Im Einbauzustand sind somit die beiden fest verschraubten und verspannten Elemente entkoppelt. Dadurch besteht keine direkte Interaktion zwischen dem Bolzen und dem Druckstück im Betrieb, wodurch die maximale Lebensdauer erhöht wird, da insbesondere die beiden Elemente nicht aneinander reiben. Insbesondere wird dadurch verhindert, dass auf den Verbindungsbolzen wirkende Zug- oder Druckkräfte, etwa bei einer Biegung des verbundenen Rotorblatts, direkt von dem Verbindungsbolzen auf das Druckstück wirken.

Gemäß einer Ausführungsform weist das Montagestück eine oder mehrere Werkzeugangriffsflächen für das Montagewerkzeug auf. Mit anderen Worten handelt es sich um Passflächen für das Montagewerkzeug. Diese dienen dem Formschluss mit dem entsprechenden Werkzeug.

Gemäß einer Ausführungsform weist das Montagestück eine Nut auf, die den Verbindungsbolzen im bestimmungsgemäßen Montagezustand im Montageabschnitt formschlüssig umgreift.

Alternativ oder zusätzlich weist der Verbindungsbolzen im Montageabschnitt eine Nut auf, in die das Montagestück im bestimmungsgemäßen Montagezustand formschlüssig eingreift.

Die beiden vorgenannten Ausführungsformen betreffen eine formschlüssige Nutverbindung zwischen den beiden Elementen Verbindungsbolzen und Montagestück, so dass mechanisch sicher die Kräfte zum Verschrauben des Verbindungsbolzens über das Montagestück auf dem Verbindungsbolzen übertragen werden können.

Gemäß einer Ausführungsform fügt sich das Montagestück im bestimmungsgemäßen Montagezustand bündig in die äußere Kontur des Druckstückes ein. Dadurch bilden das Druckstück und das Montagestück ein einheitliches Außenprofil. Damit kann ein Montagewerkzeug vollflächiger und großflächiger an dem Druckstück und/oder dem Montagestück mit dem Montagewerkzeug ansetzen.

Gemäß einer Ausführungsform ist eine äußere Formgebung des Montagestücks geeignet (d.h. derart ausgebildet) im bestimmungsgemäßen Montagezustand einen Sechskant oder eine Sechskant-Außenkontur auszubilden, die an ein entsprechendes Montagewerkzeug angepasst ist. Beispielsweise bildet das Montagestück im Montagezustand zusammen mit dem Druckstück die Sechskantform aus. Dadurch können herkömmliche Werkzeuge verwendet werden.

Gemäß einer Ausführungsform weist der Montageabschnitt des Verbindungsbolzens einen Sechskantabschnitt auf. Insbesondere handelt es sich um einen mittig bezogen auf die Längserstreckung des Verbindungsbolzens angeordneten Sechskantabschnitt. Der Sechskantabschnitt erlaubt, eine besonders gängige formschlüssige Verbindung zwischen dem Montagestück und dem Verbindungsbolzen herzustellen.

Gemäß einer Ausführungsform ist das Montagestück als Passfeder ausgebildet. Dadurch lässt sich eine sogenannte Nut-Federverbindung zwischen Montagestück und Verbindungsbolzen herstellen. Insbesondere handelt es sich bei der Passfeder um ein gängiges Bauteil, welches kostengünstig und einfach herzustellen ist.

Gemäß einer Ausführungsform haftet das Montagestück im bestimmungsgemäßen Montagezustand magnetisch an dem Verbindungsbolzen. Beispielsweise ist das Montagestück selbst magnetisch ausgebildet oder ist mit einem Magneten versehen. Dadurch ist das Montagestück im Montagezustand sicher an dem Verbindungsbolzen gehalten. Zusätzlich oder alternativ haftet das Montagestück magnetisch an dem Druckstück.

Im Montagezustand wird somit vermieden, dass das Montagestück unbeabsichtigt aus dem Druckstück herausfällt.

Gemäß einer Ausführungsform weist das Druckstück ein Zentriermittel auf, welches ausgebildet ist, das Druckstück im bestimmungsgemäßen Montagezustand des Bausatzes bezüglich den beiden Rotorblattsegmenten zu zentrieren. Das Zentriermittel ermöglicht, dass beim Zusammenfügen der beiden Rotorblattsegmente das Druckstück zwischen den beiden Rotorblattsegmenten in einer vordefinierten zentrierten Position bezüglich des Verbindungsbolzens gehalten ist. Dadurch wird die Montage erleichtert. Bei dem Zentriermittel handelt es sich beispielsweise um ein in das Druckstück oder an das Druckstück angebrachtes oder daran ausgebildetes Zentriermittel, beispielsweise einen Zentrierring. Das Zentriermittel zentriert das Druckstück bezüglich der erwähnten Verbindungselemente oder generell einer entsprechenden Bohrung im Rotorblattsegment. Das Zentriermittel ist beispielsweise an einem dem Rotorblattsegment zugewandten Ende abgeflacht oder weist eine Verjüngung auf, die das Eingreifen in das entsprechende Verbindungselement oder Bohrung begünstigt. Der Zentrierring überträgt die Querkraft (senkrecht zur Bolzenlängsachse), die beim Anziehen der Bolzen vom Anziehgerät auf die Druckstücke aufgebracht wird.

Gemäß einer Ausführungsform weist das Montagestück eine Verliersicherung auf. Beispielsweise ist das Montagestück über die Verliersicherung mit dem Druckstück oder dem Montagewerkzeug verbunden, so dass beim Herausnehmen des Montagestücks nach der Montage dieses nicht verlorengeht.

Gemäß einer Ausführungsform sind zwei oder mehrere Montagestücke pro Druckstück versehen, wobei das Druckstück entsprechend zwei oder mehr entsprechende Aussparungen aufweist.

Insbesondere sind die Aussparungen beziehungsweise Montagestücke gleichmäßig über den Umfang des Druckstücks verteilt.

Dadurch kann das Montagewerkzeug besonders sicher und in jeglichen Bau- und Montagesituationen an das Druckstück und das Montagestück angesetzt werden. Weiterhin wird zu einer besonders gleichmäßigen über den Umfang verteilten Kraftübertragung auf das Montagestück und somit den Verbindungsbolzen beigetragen.

Bei einer Mehrzahl von Montagestücken beziehungsweise Aussparungen gelten die obigen Ausführungen zu dem einen Montagestück beziehungsweise der einen Aussparung analog.

Gemäß einem zweiten Aspekt wird ein Verfahren zum Verbinden zweiter Rotorblattsegmente eines Windenergieanlagenrotorblatts offenbart. Das erste Rotorblattsegment weist an einem ersten Anschlussende eine Mehrzahl von ersten Verbindungselementen auf, die jeweils ein erstes Innengewinde aufweisen. Das zweite Rotorblattsegment weist an einem dem ersten Anschlussende zugeordneten zweiten Anschlussende eine Mehrzahl von zweiten Verbindungselementen auf, die jeweils ein zweites Innengewinde aufweisen. Das Verfahren weist die folgenden Schritte auf:
Bereitstellen eines Bausatzes gemäß dem ersten Aspekt,
teilweises Einschrauben des Verbindungsbolzens in ein erstes Innengewinde des ersten Verbindungselements des ersten Anschlussendes derart, dass der Verbindungsbolzen aus dem ersten Anschlussende herausragt,
Aufbringen des Druckstücks auf den Verbindungsbolzen,
Heranführen des zweiten Anschlussendes des zweiten Rotorblattsegments an das erste Anschlussende des ersten Rotorblattsegments,
teilweises Einschrauben des Verbindungsbolzens in das entsprechende zweite Innengewinde des zweiten Verbindungselements des zweiten Anschlussendes und Anordnen des Druckstücks derart, dass die Aussparung im Bereich des Montageabschnitts des Verbindungsbolzens liegt,
Einsetzen des Montagestücks in die Aussparung des Druckstücks derart, dass das Montagestück im Montageabschnitt sowohl formschlüssig mit dem Verbindungsbolzen als auch formschlüssig mit dem Druckstück verbunden ist,
Ansetzen eines Montagewerkzeugs an das Montagestück und/oder das Druckstück und Festschrauben des entsprechenden Verbindungsbolzens, und
Entfernen des Montagestücks aus der Aussparung des entsprechenden Druckstücks.

Das Verfahren ermöglicht im Wesentlichen die vorgenannten Vorteile und Funktionen. Das Verfahren kann entsprechend den oben genannten Ausführungsformen des Bausatzes weitergebildet sein. Insbesondere können mehrere Bausätze pro Bolzenverbindung wie oben beschrieben vorgesehen sein. Dabei ist es jedoch nicht notwendig, dass für jede Verbindung mittels eines Verbindungsbolzens ein separates Montagestück vorgesehen ist. Vielmehr ist aufgrund der lösbaren Montage der Montagestücke in den Aussparungen der Druckstücke möglich, ein Montagestück für mehrere Verschraubungen zu verwenden, wie bereits oben erwähnt.

Weitere Vorteile, Merkmale und Weiterbildungen ergeben sich aus den nachfolgenden, in Verbindung mit den Figuren erläuterten Ausführungsbeispielen. Gleiche, gleichartige oder gleich wirkende Elemente sind in den Figuren mit den gleichen Bezugszeichen versehen.

In den Figuren zeigen:
Figur 1 eine schematische Darstellung einer Windenergieanlage,
Figur 2 eine schematische Darstellung eines geteilten Rotorblatts mit zwei Rotorblattsegmenten,
Figur 3 eine schematische Prinzipschnittdarstellung einer Bolzenverbindung zweier Rotorblattsegmente eines Rotorblatts gemäß dem Stand der Technik,
Figuren 4 bis 8 verschiedene Ansichten eines Bausatzes zum Verbinden zweier Rotorblattsegmente gemäß einem Ausführungsbeispiel der Erfindung,
Figur 9 ein schematisches Ablaufdiagramm eines Verfahrens zum Verbinden zweier Rotorblattsegmente gemäß einem Ausführungsbeispiel der Erfindung,
Figuren 10 bis 14 schematische Ansichten eines Bausatzes zum Verbinden zweier Rotorblattsegmente gemäß einem weiteren Ausführungsbeispiel der Erfindung, und
Figur 15 eine schematische Ansicht eines Bausatzes zum Verbinden zweier Rotorblattsegmente gemäß einem weiteren Ausführungsbeispiel der Erfindung.

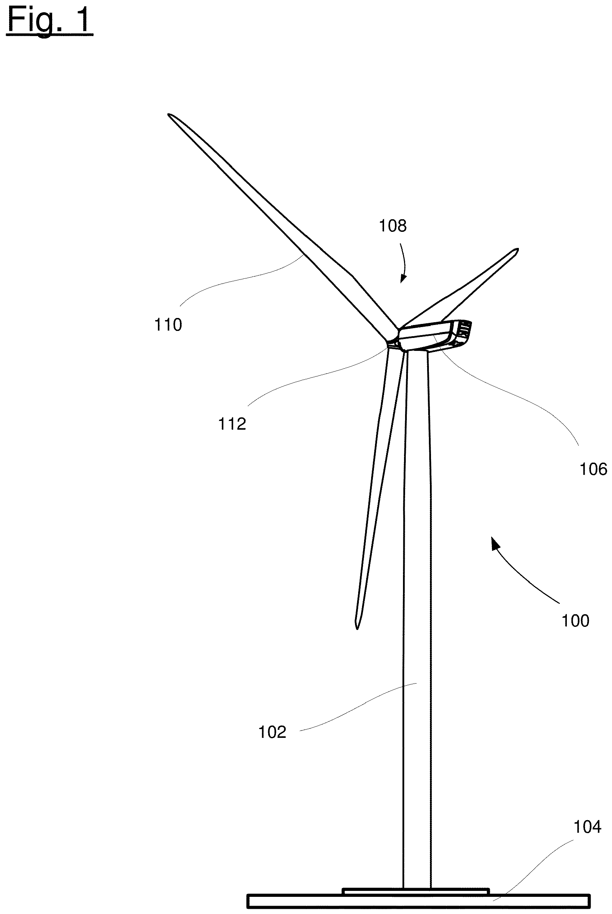

Figur 1 zeigt eine schematische Darstellung einer Windenergieanlage 100. Die Windenergieanlage 100 weist einen Turm 102 auf. Der Turm 102 ist mittels eines Fundaments 104 auf einem Untergrund befestigt. An einem dem Untergrund gegenüberliegenden Ende des Turms 102 ist eine Gondel 106 drehbar gelagert. Die Gondel 106 weist beispielsweise einen Generator auf, der über eine Rotorwelle (nicht gezeigt) mit einem Rotor 108 gekoppelt ist. Der Rotor 108 weist ein oder mehrere (Windenergieanlagen-)Rotorblätter 110 auf, die an einer Rotornabe 112 angeordnet sind.

Der Rotor 108 wird im Betrieb durch eine Luftströmung, beispielsweise Wind, in Rotation versetzt. Diese Rotationsbewegung wird über die Rotorwelle und gegebenenfalls ein Getriebe auf den Generator übertragen. Der Generator wandelt die kinetische Energie des Rotors 108 in elektrische Energie um.

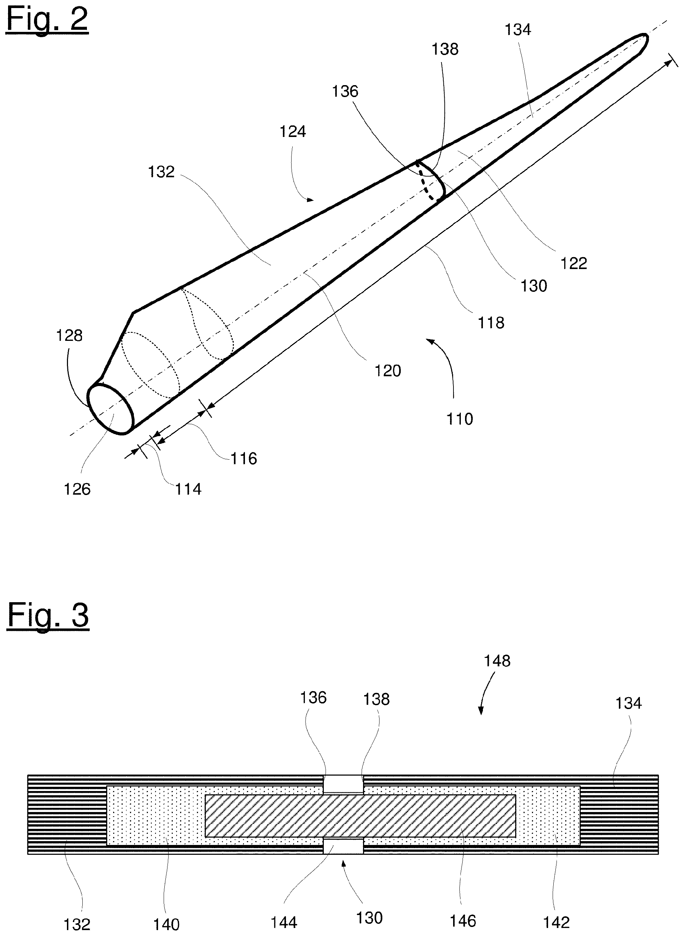

Figur 2 zeigt ein exemplarisches Windenergieanlagenrotorblatt 110. Das Rotorblatt 110 hat die Form eines herkömmlichen Rotorblattes und hat einen Rotorblattwurzelbereich 114, der der Rotornabe 112 zugewandt ist. Der Rotorblattwurzelbereich 114 hat typischerweise einen im Wesentlichen kreisrunden Querschnitt. An den Rotorblattwurzelbereich 114 schließen sich ein Übergangsbereich 116 und ein Profilbereich 118 des Rotorblatts 110 an. Das Rotorblatt 110 hat bezüglich einer Längserstreckungsrichtung 120 (auch Haupterstreckungsrichtung) eine Druckseite 122 und eine gegenüberliegende Saugseite 124. Das Rotorblatt 110 ist im Inneren im Wesentlichen hohl ausgebildet.

Im Rotorblattwurzelbereich 114 ist ein Rotorblattanschlussende 126 mit einem Flanschanschluss 128 vorgesehen, mittels welchem das Rotorblatt 110 mit einem Pitchlager oder einem Extender mechanisch verbunden wird.

Das Rotorblatt 110 weist eine Teilungsstelle 130 auf, an welcher ein blattwurzelseitiges Rotorblattsegment 132 und ein blattspitzenseitiges Rotorblattsegment 134 miteinander verbunden sind. Hierzu weisen beide Segmente 132, 134 jeweils einen Segmentverbindungsbereich 136, 138 (auch Anschlussenden) auf. Das Rotorblatt 110 ist somit ein geteiltes Rotorblatt wie eingangs beschrieben. Jedes Anschlussende 136, 138 weist eine Vielzahl von Lagerhülsen 140, 142 auf, die dem Profil folgend angeordnet sind und Innengewinde für die Aufnahme von Schraubbolzen, auch Lagerbolzen oder Verbindungsbolzen genannt, aufweisen. Beispielsweise weisen die ersten Lagerhülsen 140 Linksgewinde (erste Innengewinde) und die zweiten Lagerhülsen 142 Rechtsgewinde (zweite Innengewinde) oder umgekehrt auf. Ein Anschlussende 136, 138 ist beispielsweise als ein Flanscheinleger realisiert, welcher als Einlegeteil in eine Fertigungsform zur Herstellung des Rotorblattes 110 eingelegt wird. Es ist jedoch auch denkbar, dass kein Flanscheinleger vorgesehen ist und die Lagerhülsen direkt in die Rotorblatthalbschalen eingebettet und einlaminiert werden. Bei den Lagerhülsen handelt es sich beispielsweise um Stahlhülsen.

Im Folgenden wird die Verbindung beider Rotorblattsegmente 132, 134 genauer beschrieben, wobei dies exemplarisch anhand einer einzelnen Bolzenverbindung erläutert wird.

Figur 3 zeigt eine schematische Schnittansicht in einem Teilbereich zweier verbundener Rotorblattsegmente 132, 134 an der Teilungsstelle 130, wobei eine einzelne Bolzenverbindung 148 dargestellt ist. Das erste Anschlussende 136 des ersten Rotorblattsegments 132 weist eine Vielzahl von ersten Lagerhülsen 140, wie eingangs beschrieben, auf. Das zweite Anschlussende 138 des zweiten Rotorblattsegments 134 weist eine Vielzahl von zweiten Lagerhülsen 142 auf. In jeweils ein Paar zueinander fluchtend angeordneter erster und zweiter Lagerhülsen 140, 142 ist ein Verbindungsbolzen 146 eingeschraubt, der die beiden Anschlussenden 136, 138 und somit die beiden Rotorblattsegmente 132, 134 mechanisch fest verbindet. Zusätzlich ist zwischen die beiden Anschlussenden 136, 138 pro Bolzenverbindung 148 ein Druckstück 144 eingeklemmt.

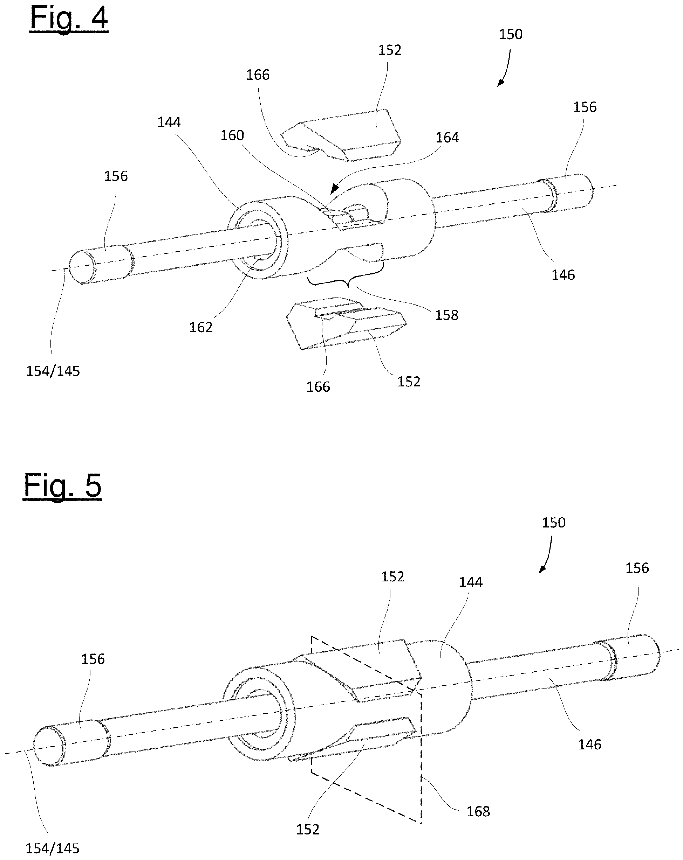

Figuren 4 bis 8 stellen ein Ausführungsbeispiel eines Bausatzes 150 für eine Bolzenverbindung 148 zum Verbinden der beiden Rotorblattsegmente 132, 134 gemäß einem Ausführungsbeispiel der Erfindung dar.

Wie anhand der Explosionsdarstellung von Figur 4 zu sehen ist, umfasst der Bausatz 150 einen Verbindungsbolzen 146, ein Druckstück 144 sowie zwei Montagestücke 152.

Der Verbindungsbolzen 146 weist eine (Mittel-)Längsachse 154 auf. Der Verbindungsbolzen 146 weist jeweils ein Außengewinde 156 an gegenüberliegenden Enden bezüglich der Längsachse 154 auf. Die beiden Außengewinde 156 sind korrespondierend zu den Innengewinden der Lagerhülsen 140, 142 beispielsweise unterschiedlich ausgebildet, wobei es sich bei einem Außengewinde 156 um ein Rechtsgewinde und bei dem anderen Außengewinde 156 um ein Linksgewinde handelt. Der Verbindungsbolzen 146 weist entlang der Längsachse 154 einen Montageabschnitt 158 auf, der im Ausführungsbeispiel etwa mittig bezüglich beider Enden angeordnet ist. Im Montageabschnitt 158 weist der Verbindungsbolzen 146 einen Sechskant 160 auf beziehungsweise ist der Verbindungsbolzen 146 sechskantförmig ausgebildet. Der Montageabschnitt 158 ist der Bereich, in dem Schraubkräfte auf den Verbindungsbolzen 146 übertragen werden.

Das Druckstück 144 ist als zylinderförmige Hülse ausgebildet und aus einem einfachen Rohrhalbzeug hergestellt. Das Druckstück 144 weist eine (Mittel-)Längsachse 145 sowie eine durchgängige Bohrung 162 (allgemein Öffnung) auf. Die Bohrung 162 ist so ausgebildet, dass ein minimaler Öffnungsdurchmesser stets größer als ein maximaler Außendurchmesser des Verbindungsbolzens 146 ist, zumindest im Bereich des Montageabschnitts 158. Das Druckstück 144 ist auf den Verbindungsbolzen 146 aufschiebbar ausgebildet. Das Druckstück 144 weist über den Umfang gleichmäßig verteilt zwei Aussparungen 164 auf.

Die beiden Montagestücke 152 sind so ausgebildet, dass diese in jeweils eine Aussparung 164 lösbar formschlüssig einsetzbar sind, so dass lediglich in radialer Richtung bezüglich der Längsachse 154 ein Freiheitsgrad vorhanden ist. Die Montagestücke 152 können wieder aus den Aussparungen 164 herausgenommen werden. Jedes Montagestück 152 ist ausgebildet, im eingesetzten Zustand einen Formschluss mit dem Verbindungsbolzen 146 einzugehen. Hierzu ist das Montagstück 152 auf der dem Verbindungsbolzen 146 zugewandten Seite mit einer Nut 166 versehen, die den Sechskant 160 des Verbindungsbolzens 146 formschlüssig umgreifen kann. Die Montagestücke 152 dienen dem Ansetzen eines Montagewerkzeugs zum Verschrauben des Verbindungsbolzens 146, wie nachfolgend erläutert wird.

Figur 5 zeigt einen bestimmungsgemäßen Montagezustand des Bausatzes 150 zum Verbinden der beiden Rotorblattsegmente 132, 134 (aus Gründen der Übersichtlichkeit nicht dargestellt). Das Druckstück 144 ist derart auf den Verbindungsbolzen 146 aufgeschoben, dass der Montageabschnitt 158 des Verbindungsbolzens 146 im Bereich der Aussparungen 164 liegt. Die beiden Montagestücke 152 sind in die Aussparungen 164 eingesetzt, so dass die oben beschriebenen Formschlüsse zum Druckstück 144 einerseits und dem Verbindungsbolzen 146 andererseits gegeben sind.

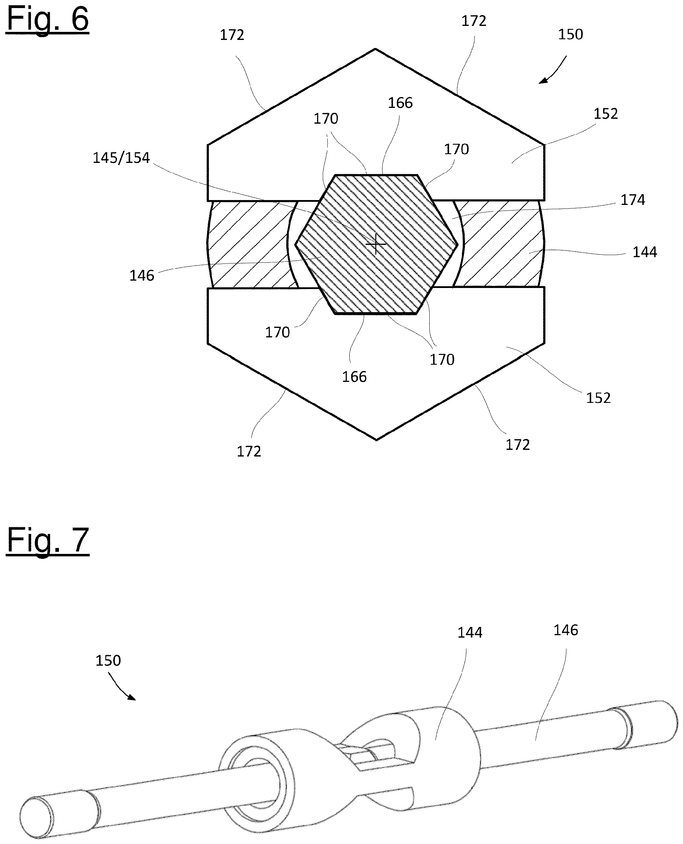

Figur 6 zeigt schematisch einen Querschnitt entlang einer Schnittebene 168 (siehe Figur 5) im bestimmungsgemäßen Montagezustand des Bausatzes 150. Die Nuten 166 der Montagestücke 152 umgreifen mit Passflächen 170 den Sechskant 160 des Verbindungsbolzens 146 formschlüssig. Die Montagestücke 152 selbst sind an ihren außenliegenden Seiten sechskantartig ausgebildet und weisen jeweils zwei entsprechende, winklig zueinander verlaufende Werkzeugangriffsflächen 172 auf.

Zum Verschrauben des Verbindungsbolzens 146 wird an die Werkzeugangriffsflächen 172 im gezeigten Montagezustand nun ein entsprechendes Montagewerkzeug, etwa ein hydraulisches Spannwerkzeug, angesetzt. Hierzu umgreift das Montagewerkzeug insbesondere die Montagestücke 152 formschlüssig, so dass die Montagestücke 152 und somit das Druckstück 144 in Drehung um die Längsachse 145 beziehungsweise 154 versetzt werden. Durch den Formschluss der Montagestücke 152 mit dem Verbindungsbolzen 146 wird letzterer in Drehung versetzt und mit den Außengewinden 156 entsprechend in den Innengewinden der Lagerhülsen 140, 142 verschraubt beziehungsweise verspannt, so dass insbesondere das Druckstück 144 zwischen den beiden Rotorblattsegmenten 132, 134 verspannt ist.

Figur 7 zeigt einen bestimmungsgemäßen Einbauzustand des Bausatzes 150, in welchem die beiden Rotorblattsegmente 132, 134 fest miteinander verbunden sind (aus Gründen der Übersichtlichkeit nicht dargestellt). Im Einbauzustand sind die Montagestücke 152 wieder aus den Aussparungen 164 des Druckstücks 144 entnommen und können für eine weitere Bolzenverbindung 148 wiederverwendet werden.

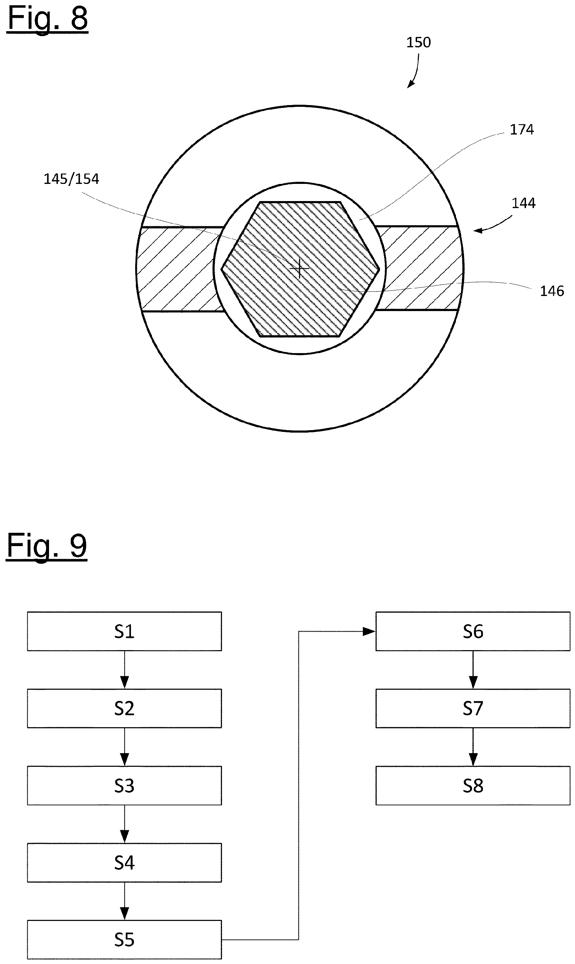

Figur 8 zeigt eine Schnittansicht entlang der Schnittebene 168 im Einbauzustand mit entnommenen Montagestücken 152. Deutlich erkennbar ist, dass zwischen dem Verbindungsbolzen 146 und dem Druckstück 144 kein Kontakt besteht. Vielmehr ist zwischen dem Verbindungsbolzen 146 und dem Druckstück 144 ein Spalt 174 ausgebildet (siehe auch Figur 6).

Im Folgenden wird ein Verfahren zum Verbinden zweier Rotorblattsegmente 132, 134 mittels des Bausatzes 150 gemäß Figuren 4 bis 8 in Verbindung mit dem schematischen Ablaufdiagramm gemäß Figur 9 beschrieben.

Zunächst befindet sich ein Rotorblattsegment, etwa das erste Rotorblattsegment 132, in einer Ausgangssituation.

In einem ersten Schritt S1 wird der Bausatz 150 bereitgestellt.

In einem zweiten Schritt S2 wird der Verbindungsbolzen 146 teilweise in ein erstes Innengewinde des ersten Anschlussendes 136 des erstes Rotorblattsegments 132 eingeschraubt, so dass der Verbindungsbolzen 146 aus dem ersten Anschlussende 136 herausragt.

In einem nächsten Schritt S3 wird das Druckstück 144 auf den Verbindungsbolzen 146 aufgeschoben.

In einem nächsten Schritt S4 wird das zweite Anschlussende 138 des zweiten Rotorblattsegments 134 an das erste Anschlussende 136 des ersten Rotorblattsegments 132 herangeführt.

In einem nächsten Schritt S5 wird der Verbindungsbolzen 146 teilweise in ein zu dem ersten Innengewinde korrespondierendes zweites Innengewinde des zweiten Anschlussendes 138 eingeschraubt. Dabei wird das Druckstück 144 so angeordnet, dass die Aussparungen 164 im Bereich des Montageabschnitts 158 des Verbindungsbolzens 146 liegen.

In einem nächsten Schritt S6 werden die Montagestücke 152 in die Aussparungen 164 eingesetzt, so dass diese jeweils formschlüssig mit dem Verbindungsbolzen 146 als auch formschlüssig mit dem Druckstück 144 im Eingriff sind.

In einem nächsten Schritt S7 wird ein Montagewerkzeug an die Montagestücke 152 und/oder das Druckstück 144 formschlüssig angesetzt und der Verbindungsbolzen 146 und das Druckstück 144 wie oben beschrieben festgeschraubt beziehungsweise verspannt.

In einem nächsten Schritt S8 werden die Montagestücke 152 aus dem Druckstück 144 entnommen.

Es sei darauf hingewiesen, dass zum Verbinden der beiden Rotorblattsegmente 132, 134 entsprechend der Anzahl von vorgesehenen Bolzenverbindungen 148 eine Vielzahl von Verbindungsbolzen 146 und Druckstücken 144 gleichzeitig teilmontiert werden müssen. Dies bedeutet, dass insbesondere das teilweise Einschrauben der Verbindungsbolzen 146 in die Anschlussenden 136, 138 und das Aufschieben der Druckstücke 144 abgeschlossen sein muss, bevor die Verbindungsbolzen 146 endgültig festgeschraubt werden. Es sind demzufolge eine Vielzahl von Bausätzen 150 vonnöten, wobei nicht zwingend eine entsprechende Vielzahl von Montagestücken 152 nötig ist, da diese wie beschrieben lösbar montierbar und daher wiederverwendbar sind.

Es sei an dieser Stelle erwähnt, dass die obigen Ausführungen auch für ein geteiltes Rotorblatt mit zwei oder mehr Teilungsstellen 130 gleichermaßen gelten. Ein solches geteiltes Rotorblatt würde drei oder mehr Rotorblattsegmente aufweisen, die entsprechend obiger Beschreibung analog verbunden werden können.

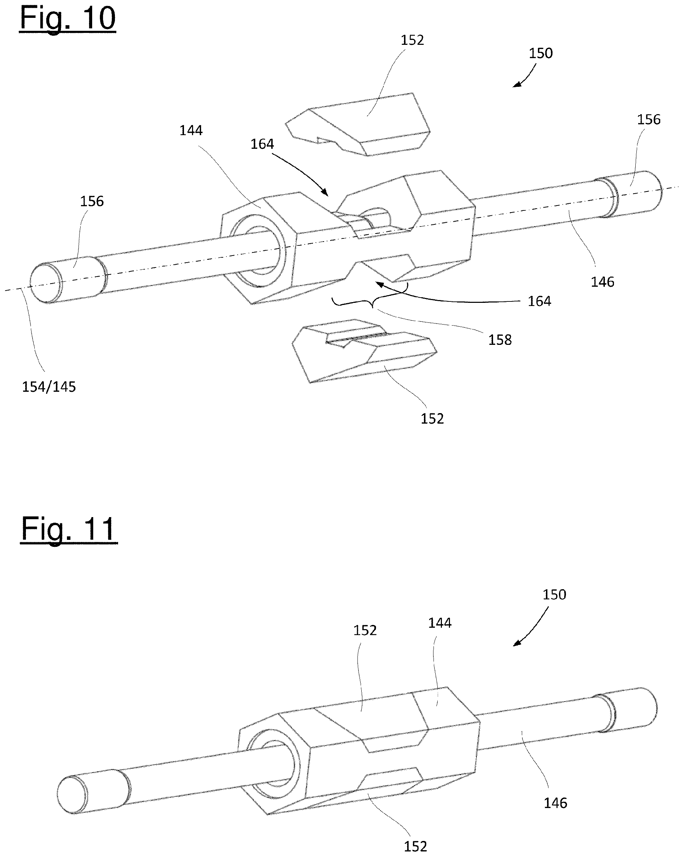

Figuren 10 und 11 zeigen ein zweites Ausführungsbeispiel eines Bausatzes 150 zum Verbinden zweier Rotorblattsegmente 132, 134 in einer Explosionsansicht. Der Bausatz 150 gleicht im Wesentlichen dem beschriebenen Bausatz gemäß den Figuren 4 bis 8. Im Unterschied zum ersten Ausführungsbeispiel sind sowohl das Druckstück 144 selbst als auch die Montagestücke 152 sechskantförmig ausgebildet. Zusätzlich sind das Druckstück 144 und die Montagestücke 152 hinsichtlich ihrer äußeren Formgebung so ausgebildet, dass die Montagestücke 152 im Montagezustand flächenbündig in den Aussparungen 164 aufgenommen sind (siehe den bestimmungsgemäßen Montagezustand gemäß Figur 11). Das Druckstück 144 und die Montagestücke 152 bilden somit eine gemeinsame Außenkontur, wobei die

Montagestücke 152 insbesondere nicht über die äußeren Abmessungen des Druckstücks 144 hinausragen (in radialer Richtung bezogen auf die Längsachse 145).

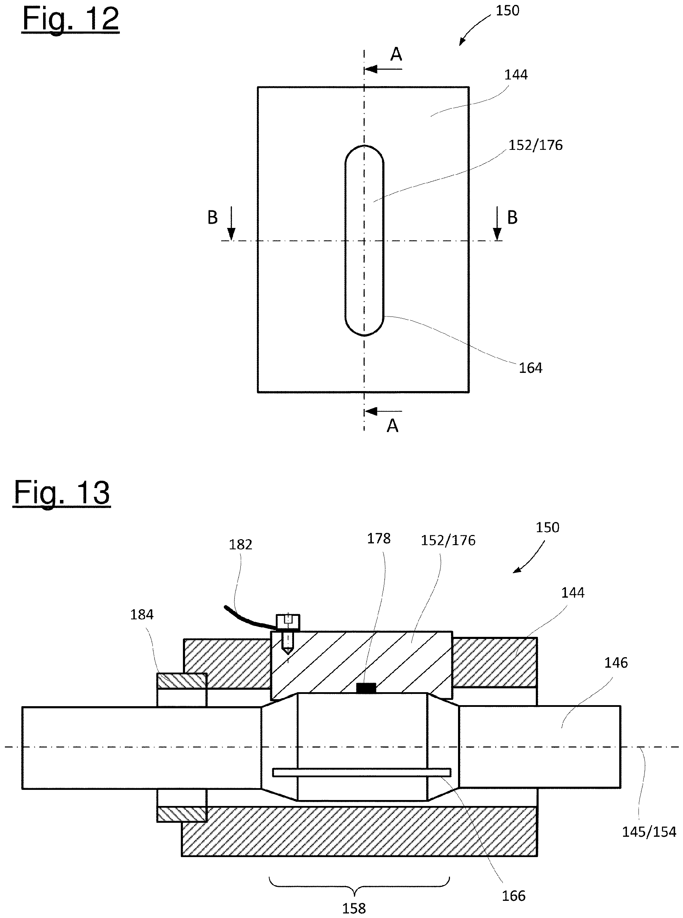

Figuren 12 bis 14 zeigen ein weiteres Ausführungsbeispiel eines Bausatzes 150, der im Wesentlichen analog den bereits beschriebenen Ausführungsbeispielen entspricht. Im Unterschied zu oben ist eine sogenannte Nut-Federverbindung mit drei Montagestücken 152 realisiert.

Figur 12 zeigt eine schematische Aufsicht auf den Bausatz 150 im bestimmungsgemäßen Montagezustand, wobei kein Verbindungsbolzen 146 gezeigt ist. Zu sehen ist ein Druckstück 144 sowie eine Passfeder 176 als Montagestück 152.

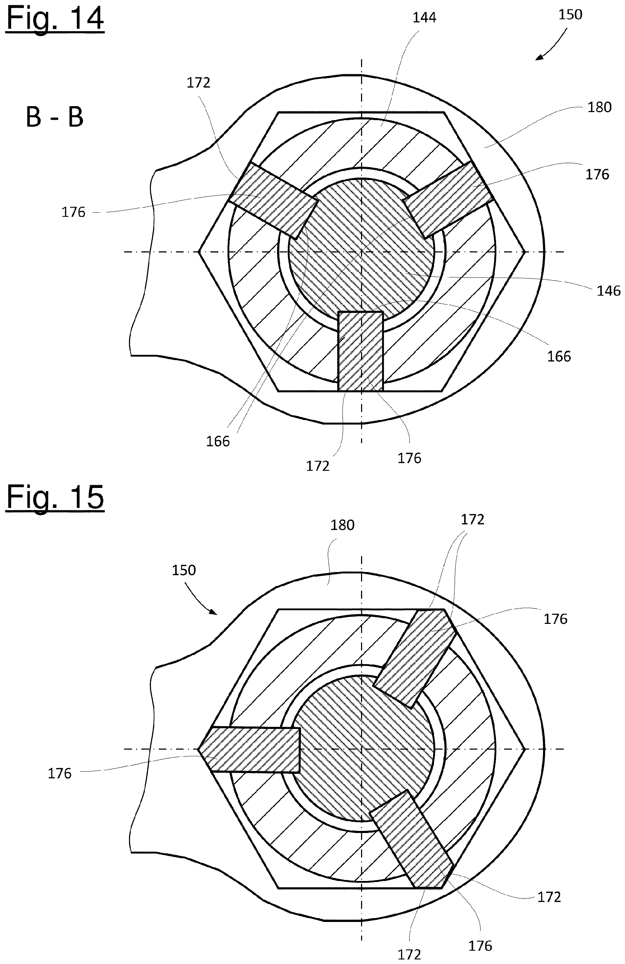

Figur 13 zeigt eine schematische Längsschnittansicht des Bausatzes 150 gemäß der Schnittebene A-A der Figur 12. Figur 14 zeigt einen schematischen Querschnitt des Bausatzes 150 gemäß der Schnittebene B-B der Figur 12. In beiden Figuren 13 und 14 ist der Verbindungsbolzen 146 dargestellt. Im gezeigten Ausführungsbeispiel sind drei Passfedern 176 als lösbar zu montierende Montagestücke 152 vorgesehen. Die Passfedern 176 sind im Montagezustand gleichmäßig über den Umfang des Druckstücks 144 verteilt in entsprechend geformten Aussparungen 164 des Druckstücks 144 lösbar formschlüssig eingesetzt. Die Passfedern 176 sind analog zu oben im Montageabschnitt 158 formschlüssig mit dem Verbindungsbolzen 146 verbunden. Hierzu greifen die Passfedern 176 in entsprechend geformte Nuten 166 des Verbindungsbolzens 146 ein. Im Unterschied zu oben ist der Verbindungsbolzen 146 im Montageabschnitt 158 daher nicht sechskantartig geformt.

Die Passfedern 176 weisen jeweils eine Werkzeugangriffsfläche 172 auf und sind so ausgebildet, dass ein entsprechendes Sechskant-Montagewerkzeug 180 (siehe Figur 14) ansetzen kann. Somit ist wieder über die Montagestücke 152, das heißt die Passfedern 176, ein Verschrauben des Bolzens 146 ermöglicht. Nach dem Festschrauben und Verspannen können die Passfedern 176 wiederum entnommen werden, so dass das Druckstück 144 von dem Bolzen 146 mechanisch entkoppelt ist.

Wie anhand der Figur 13 zu erkennen ist, weisen die Montagestücke 152 optional ein oder mehrere Magneten 178 auf, mittels derer die Montagestücke 152 an dem Verbindungsbolzen 146 haften. Die Haftkraft ist dergestalt, dass ein einfaches Herausfallen der Montagestücke 152 aus den Druckstücken 144 verhindert ist, wobei dennoch die Lösbarkeit der Montagestücke 152 unter Lösen der magnetischen Haftkraft gewährleistet ist.

Wie anhand der Figur 13 weiter zu erkennen ist, weisen die Passfedern 176 optional eine Verliersicherung 182 auf. Beispielsweise sind die Passfedern 176 an dem Montagewerkzeug 180 über eine Seilverbindung angebunden, so dass diese beim Lösen aus dem Druckstück 144 für eine weitere Montage einer anderen Bolzenverbindung 148 nicht verloren gehen oder außer Reichweite gelangen.

Wie anhand der Figur 13 weiter zu erkennen ist, weist das Druckstück 144 optional ein Zentriermittel 184 in Form einer Zentrierhülse oder eines Zentrierrings auf, wie eingangs beschrieben.

Figur 15 zeigt in einer zu Figur 14 analogen Ansicht ein weiteres Ausführungsbeispiel für einen Bausatz 150, der im Wesentlichen dem Beispiel gemäß Figuren 12 bis 14 entspricht. Im Unterschied weisen die Passfedern 176 jeweils zwei winklig zueinander angeordnete Werkzeugangriffsflächen 172 auf, die an Ecken eines entsprechenden Sechskant-Montagewerkzeugs 180 angepasst sind und in diese zum Verschrauben des Bolzens 146 eingreifen.

Zusammengefasst ist den Bausätzen 150 der beschriebenen Ausführungsbeispiele gemein, dass zwei oder mehr Montagestücke 152 vorgesehen sind, die in Aussparungen 164 eines Druckstücks 144 eingesetzt werden, so dass sowohl eine formschlüssige Verbindung zu dem Druckstück 144 als auch zum Verbindungsbolzen 146 hergestellt ist. Die Montagestücke 152 werden lösbar montiert und lassen sich einfach wieder aus den Aussparungen 164 entnehmen.

Für alle beschriebenen Ausführungsbeispiele gilt, dass in alternativen Ausführungsbeispielen jeweils auch mehr oder weniger Montagestücke 152 und entsprechend Aussparungen 164 vorgesehen sind. Auch sei erwähnt, dass andere Formgebungen bei den Verbindungsbolzen 146 im Montageabschnitt 185, den Druckstücken 144 und/oder den Montagestücken 152 denkbar sind, solange entsprechend Formschlüsse ermöglicht sind, die die beschriebene Montage und Funktionalitäten gewährleisten. Weiter sei erwähnt, dass sämtliche Merkmale der beschriebenen Bausätze 150 gemäß den Ausführungsbeispielen kombinierbar sind. Beispielsweise sind auch bei den Montagestücken 152 der Ausführungsbeispiele gemäß den Figuren 1 bis 8, 10 und 11 Magnete denkbar.

### Bezugszeichenliste

- 100: Windenergieanlage
- 102: Turm
- 104: Fundament
- 106: Gondel
- 108: Rotor
- 110: Rotorblatt
- 112: Rotornabe
- 114: Rotorblattwurzelbereich
- 116: Übergangsbereich
- 118: Profilbereich
- 120: Längserstreckungsrichtung
- 122: Druckseite
- 124: Saugseite
- 126: Rotorblattanschlussende
- 128: Flanschanschluss
- 130: Teilungsstelle
- 132: erstes Rotorblattsegment
- 134: zweites Rotorblattsegment
- 136: erstes Anschlussende
- 138: zweites Anschlussende
- 140: erste Lagerhülse
- 142: zweite Lagerhülse
- 144: Druckstück
- 145: Längsachse eines Druckstücks
- 146: Verbindungsbolzen
- 148: Bolzenverbindung
- 150: Bausatz
- 152: Montagestück
- 154: Längsachse eines Verbindungsbolzens
- 156: Außengewinde
- 158: Montageabschnitt
- 160: Sechskant
- 162: durchgängige Öffnung
- 164: Aussparung
- 166: Nut
- 168: Schnittebene
- 170: Passfläche
- 172: Werkzeugangriffsfläche
- 174: Spalt
- 176: Passfeder
- 178: Magnet
- 180: Montagewerkzeug
- 182: Verliersicherung
- 184: Zentriermittel
- A-A: Schnittebene
- B-B: Schnittebene
- S1 bis S8: Schritte

## Patentansprüche

1. Bausatz (150) zum Verbinden zweier Rotorblattsegmente (132, 134) eines Windenergieanlagenrotorblatts (110), aufweisend
- einen Verbindungsbolzen (146) zum Verschrauben der beiden Rotorblattsegmente (132, 134),
- ein als Hülse ausgebildetes Druckstück (144), welches eine Aussparung (164) aufweist und welches in einem verbundenen Zustand der beiden Rotorblattsegmente (132, 134) zwischen den Rotorblattsegmenten (132, 134) angeordnet ist, und
- ein Montagestück (152) für ein Montagewerkzeug (180) zum Aufbringen einer Schraubkraft,
wobei der Bausatz (150) derart ausgebildet ist, dass in einem bestimmungsgemäßen Montagezustand des Bausatzes (150) zum Verbinden der beiden Rotorblattsegmente (132, 134)
-- der Verbindungsbolzen (146) derart durch das Druckstück (144) durchgeführt ist, dass ein Montageabschnitt (158) des Verbindungsbolzens (146) im Bereich der Aussparung (164) des Druckstücks (144) angeordnet ist, und
-- das Montagestück (152) lösbar in die Aussparung (164) des Druckstücks (144) einsetzbar ist, so dass das Montagestück (152) im Montageabschnitt (158) sowohl formschlüssig mit dem Verbindungsbolzen (146) als auch formschlüssig mit dem Druckstück (144) verbunden ist, und
-- in einem bestimmungsgemäßen Einbauzustand des Bausatzes (150) das Montagestück (152) aus dem Druckstück (144) entnehmbar ist.

2. Bausatz (150) nach Anspruch 1,
wobei im bestimmungsgemäßen Einbauzustand des Bausatzes (150) das Druckstück (144) und der Verbindungsbolzen (146) voneinander entkoppelt sind.

3. Bausatz (150) nach einem der vorhergehenden Ansprüche, wobei das Montagestück (152) eine oder mehrere Werkzeugangriffsflächen (172) für das Montagewerkzeug (180) aufweist.

4. Bausatz (150) nach einem der vorhergehenden Ansprüche, wobei das Montagestück (152) eine Nut (166) aufweist, die den Verbindungsbolzen (146) im bestimmungsgemäßen Montagezustand im Montageabschnitt (158) formschlüssig umgreift.

5. Bausatz (150) nach einem der vorhergehenden Ansprüche, wobei der Verbindungsbolzen (146) im Montageabschnitt (158) eine Nut (166) aufweist, in die das Montagestück (152) im bestimmungsgemäßen Montagezustand formschlüssig eingreift.

6. Bausatz (150) nach einem der vorhergehenden Ansprüche, wobei sich das Montagestück (152) im bestimmungsgemäßen Montagezustand bündig in die äußere Kontur des Druckstücks (144) einfügt.

7. Bausatz (150) nach einem der vorhergehenden Ansprüche, wobei eine äußere Formgebung des Montagestücks (152) geeignet ist im bestimmungsgemäßen Montagezustand einen Sechskant auszubilden.

8. Bausatz (150) nach einem der vorhergehenden Ansprüche, wobei der Montageabschnitt (158) des Verbindungsbolzens (146) einen Sechskantabschnitt (160) aufweist.

9. Bausatz (150) nach einem der Ansprüche 1 bis 3, 5 oder 6, wobei das Montagestück (152) als Passfeder (176) ausgebildet ist.

10. Bausatz (150) nach einem der vorhergehenden Ansprüche, wobei das Montagestück (152) im bestimmungsgemäßen Montagezustand magnetisch an dem Verbindungsbolzen (146) haftet.

11. Bausatz (150) nach einem der vorhergehenden Ansprüche, wobei das Druckstück (144) ein Zentriermittel (184) aufweist, welches ausgebildet ist, das Druckstück (144) im bestimmungsgemäßen Montagezustand des Bausatzes (150) bezüglich den beiden Rotorblattsegmenten (132, 134) zu zentrieren.

12. Bausatz (150) nach einem der vorhergehenden Ansprüche, wobei das Montagestück (152) eine Verliersicherung (182) aufweist.

13. Bausatz (150) nach einem der vorhergehenden Ansprüche, wobei zwei oder mehr Montagestücke (152) vorgesehen sind und das Druckstück (144) entsprechend zwei oder mehr Aussparungen (164) aufweist.

14. Bausatz (150) nach Anspruch 13,
wobei die Aussparungen (164) beziehungsweise Montagestücke (152) gleichmäßig über den Umfang des Druckstücks (144) verteilt sind.

15. Verfahren zum Verbinden zweier Rotorblattsegmente (132, 134) eines Windenergieanlagenrotorblatts (110), wobei
das erste Rotorblattsegment (132) an einem ersten Anschlussende (136) eine Mehrzahl von ersten Verbindungselementen (140) aufweist, die jeweils ein erstes Innengewinde aufweisen, und
das zweite Rotorblattsegment (134) an einem dem ersten Anschlussende (136) zugeordneten zweiten Anschlussende (138) eine Mehrzahl von zweiten Verbindungselementen (142) aufweist, die jeweils ein zweites Innengewinde aufweisen,
das Verfahren aufweisend die Schritte:
Bereitstellen eines Bausatzes (150) nach einem der Ansprüche 1 bis 14,
teilweises Einschrauben des Verbindungsbolzens (146) in ein erstes Innengewinde (156) eines ersten Verbindungselements (140) des ersten Anschlussendes (136) derart, dass der Verbindungsbolzen (146) aus dem ersten Anschlussende (136) herausragt,
Aufbringen des Druckstücks (144) auf den Verbindungsbolzen (146),
Heranführen des zweiten Anschlussendes (138) des zweiten Rotorblattsegments (134) an das erste Anschlussende (136) des ersten Rotorblattsegments (132),
teilweises Einschrauben des Verbindungsbolzens (146) in das entsprechende zweite Innengewinde (158) eines zweiten Verbindungselements (142) des zweiten Anschlussendes (138) und Anordnen des Druckstücks (144) derart, dass die Aussparung (164) im Bereich des Montageabschnitts (158) des Verbindungsbolzens (146) liegt,
Einsetzen des Montagestücks (152) in die Aussparung (164) des Druckstücks (144) derart, dass das Montagestück (152) im Montageabschnitt (158) sowohl formschlüssig mit dem Verbindungsbolzen (146) als auch formschlüssig mit dem Druckstück (144) verbunden ist,
Ansetzen eines Montagewerkzeugs (180) an das Montagestück (152) und/oder das Druckstück (144) und Festschrauben des entsprechenden Verbindungsbolzens (146), und
Entfernen des Montagestücks (152) aus der Aussparung (164) des entsprechenden Druckstücks (144).

## Claims

1. An assembly kit (150) for connecting two rotor blade segments (132, 134) of a wind turbine rotor blade (110), comprising
- a connecting bolt (146) for screwing together the two rotor blade segments (132, 134),
- a pressure piece (144) formed as a sleeve, which has a recess (164) and which is arranged between the rotor blade segments (132, 134) in a connected state of the two rotor blade segments (132, 134), and
- a mounting piece (152) for a mounting tool (180) for applying a bolting force,
wherein the assembly kit (150) is designed in such a way that, in an intended assembly state of the assembly kit (150) for connecting the two rotor blade segments (132, 134)
-- the connecting bolt (146) is passed through the pressure piece (144) in such a way that a mounting section (158) of the connecting bolt (146) is arranged in the region of the recess (164) of the pressure piece (144), and
-- the mounting piece (152) is detachably insertable into the recess (164) of the pressure piece (144), so that the mounting piece (152) is positively connected in the mounting section (158) both to the connecting bolt (146) and to the pressure piece (144), and
-- in an intended installation state of the assembly kit (150), the mounting piece (152) can be removed from the pressure piece (144).

2. The assembly kit (150) according to claim 1, wherein in the intended installation state of the assembly kit (150) the pressure piece (144) and the connecting bolt (146) are decoupled from each other.

3. The assembly kit (150) according to any one of the preceding claims, wherein the assembly piece (152) comprises one or more tool engagement surfaces (172) for the assembly tool (180).

4. The assembly kit (150) according to one of the preceding claims, wherein the assembly piece (152) has a groove (166) which positively engages around the connecting bolt (146) in the assembly section (158) in the intended assembly state.

5. The assembly kit (150) according to any one of claims 1 to 3, wherein the connecting bolt (146) has a groove (166) in the assembly section (158), in which groove the assembly piece (152) engages in a form-fitting manner in the intended assembly state.

6. The assembly kit (150) according to any one of the preceding claims, wherein the mounting piece (152) fits flush into the outer contour of the pressure piece (144) in the intended assembly state.

7. The assembly kit (150) according to any one of the preceding claims, wherein an outer shaping of the assembly piece (152) is suitable to form a hexagon together with the pressure piece (144).

8. The assembly kit (150) according to any one of the preceding claims, wherein the mounting portion (158) of the connecting bolt (146) comprises a hexagonal portion (160).

9. The assembly kit (150) according to any one of claims 1 to 6, wherein the mounting piece (152) is formed as a fit-in key (176) .

10. The assembly kit (150) according to any one of the preceding claims, wherein the mounting piece (152) magnetically adheres to the connecting bolt (146) in the intended mounting state.

11. The assembly kit (150) according to one of the preceding claims, wherein the pressure piece (144) comprises a centering means (184) which is designed to center the pressure piece (144) with respect to the two rotor blade segments (132, 134) in the intended assembly state of the assembly kit (150).

12. The assembly kit (150) according to any one of the preceding claims, wherein the mounting piece (152) comprises an anti-loss device (182).

13. The assembly kit (150) according to any one of the preceding claims, wherein two or more mounting pieces (152) are provided and the pressure piece (144) has two or more recesses (164) accordingly.

14. The assembly kit (150) according to claim 13, wherein the recesses (164) or mounting pieces (152) are evenly distributed over the circumference of the pressure piece (144).

15. A method of connecting two rotor blade segments (132, 134) of a wind turbine rotor blade (110), wherein
the first rotor blade segment (132) has a plurality of first connecting elements (140) at a first connecting end (136), each first connecting element (140) having a first internal thread, and
the second rotor blade segment (134) has at a second connection end (138) associated with the first connection end (136), a plurality of second connection elements (142) each having a second internal thread,
the method comprising the steps of:
providing an assembly kit (150) according to any one of claims 1 to 14,
partially screwing the connecting bolt (146) into a first internal thread (156) of a first connecting element (140) of the first connection end (136) such that the connecting bolt (146) protrudes from the first connection end (136),
applying the pressure piece (144) to the connecting bolt (146),
bringing the second connection end (138) of the second rotor blade segment (134) to the first connection end (136) of the first rotor blade segment (132),
partially screwing the connecting bolt (146) into the corresponding second internal thread (158) of a second connecting element (142) of the second connecting end (138) and arranging the pressure piece (144) in such a way that the recess (164) lies in the region of the mounting section (158) of the connecting bolt (146),
inserting the mounting piece (152) into the recess (164) of the pressure piece (144) in such a way that the mounting piece (152) is positively connected in the mounting section (158) both to the connecting bolt (146) and to the pressure piece (144),
applying an assembly tool (180) to the mounting piece (152) and/or the pressure piece (144) and tightening the corresponding connecting bolt (146), and
removing the mounting piece (152) from the recess (164) of the corresponding pressure piece (144).

## Revendications

1. Module (150) de raccordement de deux segments de pale de rotor (132, 134) d'une éolienne (110), présentant
- un boulon de raccordement (146) pour l'assemblage par vissage des deux segments de pale de rotor (132, 134),
- une pièce de pression (144) constituée comme manchon, laquelle présente un évidement (164) et, dans un état raccordé des deux segments de pale de rotor (132, 134), est disposée entre les segments de pale de rotor (132, 134), et
- une pièce de montage (152) pour un outil de montage (180) destiné à exercer une force de vissage,
sachant que le module (150) est constitué de telle manière que, dans un état de montage du module (150) conforme à la destination, pour le raccordement des deux segments de pale de rotor (132, 134),
- le boulon de raccordement (146) est mené à travers la pièce de pression (144) de telle manière qu'une section de montage (158) du boulon de raccordement (146) soit disposée dans la zone de l'évidement (164) de la pièce de pression (144), et
- la pièce de montage (152) soit insérable de manière détachable dans l'évidement (164) de la pièce de pression (144) de telle sorte que la pièce de montage (152) soit raccordée dans la section de montage (158) aussi bien par complémentarité de forme avec le boulon de raccordement (146) que par complémentarité de forme avec la pièce de pression (144), et
- dans un état d'installation du module (150) conforme à la destination, la pièce de montage (152) puisse être enlevée de la pièce de pression (144).

2. Module (150) selon la revendication 1,
sachant que, dans l'état d'installation du module (150) conforme à la destination, la pièce de pression (144) et le boulon de raccordement (146) sont découplés l'une de l'autre.

3. Module (150) selon l'une des revendications précédentes,
sachant que la pièce de montage (152) présente une ou plusieurs surfaces d'attaque d'outil (172) pour l'outil de montage (180).

4. Module (150) selon l'une des revendications précédentes,
sachant que la pièce de montage (152) présente une rainure (166) qui enserre le boulon de raccordement (146) par complémentarité de forme dans la section de montage (158) dans l'état de montage conforme à la destination.

5. Module (150) selon l'une des revendications précédentes,
sachant que le boulon de raccordement (146) présente, dans la section de montage (158), une rainure (166) dans laquelle la pièce de montage (152) se met en prise par complémentarité de forme dans l'état de montage conforme à la destination.

6. Module (150) selon l'une des revendications précédentes,
sachant que la pièce de montage (152) s'insère de niveau dans le contour extérieur de la pièce de pression (144) dans l'état de montage conforme à la destination.

7. Module (150) selon l'une des revendications précédentes,
sachant qu'une mise en forme extérieure de la pièce de montage (152) est apte à constituer un hexagone dans l'état de montage conforme à la destination.

8. Module (150) selon l'une des revendications précédentes,
sachant que la section de montage (158) du boulon de raccordement (146) présente une section hexagonale (160).

9. Module (150) selon l'une des revendications 1 à 3, 5 ou 6,
sachant que la pièce de montage (152) est constituée comme clavette (176).

10. Module (150) selon l'une des revendications précédentes,
sachant que la pièce de montage (152) adhère magnétiquement au boulon de raccordement (146) dans l'état de montage conforme à la destination.

11. Module (150) selon l'une des revendications précédentes,
sachant que la pièce de pression (144) présente un moyen de centrage (184), lequel est constitué pour centrer la pièce de pression (144) par rapport aux deux segments de pale de rotor (132, 134) dans l'état de montage du module (150) conforme à la destination.

12. Module (150) selon l'une des revendications précédentes,
sachant que la pièce de montage (152) présente un dispositif antiperte (182).

13. Module (150) selon l'une des revendications précédentes,
sachant que deux ou plus de deux pièces de montage (152) sont prévues et la pièce de pression (144) présente de manière correspondante deux ou plus de deux évidements (164).

14. Module (150) selon la revendication 13,
sachant que les évidements (164) ou pièces de montage (152) sont répartis uniformément sur le pourtour de la pièce de pression (144).

15. Procédé de raccordement de deux segments de pale de rotor (132, 134) d'une éolienne, sachant que
le premier segment de pale de rotor (132) présente, à une première extrémité de jonction (136), une pluralité de premiers éléments de raccordement (140) qui présentent respectivement un premier filetage intérieur, et
le deuxième segment de pale de rotor (134) présente, à une deuxième extrémité de jonction (138) associée à la première extrémité de jonction (136), une pluralité de deuxièmes éléments de raccordement (142) qui présentent respectivement un deuxième filetage intérieur,
le procédé présentant les étapes de :
mise à disposition d'un module (150) selon l'une des revendications 1 à 14,
vissage partiel du boulon de raccordement (146) dans un premier filetage intérieur (156) d'un premier élément de raccordement (140) de la première extrémité de jonction (136) de telle manière que le boulon de raccordement (146) dépasse de la première extrémité de jonction (136),
mise en place de la pièce de pression (144) sur le boulon de raccordement (146),
amenée de la deuxième extrémité de jonction (138) du deuxième segment de pale de rotor (134) à la première extrémité de jonction (136) du premier segment de pale de rotor (132),
vissage partiel du boulon de raccordement (146) dans le deuxième filetage intérieur (158) correspondant d'un deuxième élément de raccordement (142) de la deuxième extrémité de jonction (138) et disposition de la pièce de pression (144) de telle manière que l'évidement (164) soit situé dans la zone de la section de montage (158) du boulon de raccordement (146),
insertion de la pièce de montage (152) dans l'évidement (164) de la pièce de pression (144) de telle manière que la pièce de montage (152) soit raccordée dans la section de montage (158) aussi bien par complémentarité de forme avec le boulon de raccordement (146) que par complémentarité de forme avec la pièce de pression (144),
pose d'un outil de montage (180) sur la pièce de montage (152) et/ou la pièce de pression (144) et serrage du boulon de raccordement (146) correspondant, et
enlèvement de la pièce de montage (152) de l'évidement (164) de la pièce de pression (144) correspondante.
